# EUROPEAN PATENT SPECIFICATION

(11) **EP 3 096 468 B1**
(45) Date of publication and mention of the grant of the patent: **01.04.2020**
(21) Application number: 16171299.7
(22) Date of filing: 10.10.2008
(51) Int. Cl.: H04B 7/26, H04W 16/00, H04W 36/08, H04W 36/04

(54) **FEMTO CELL SYNCHRONIZATION**
FEMTOZELLSYNCHRONISATION
SYNCHRONISATION DE CELLULE FEMTO

(30) Priority: 12.10.2007 US 979797 P; 09.10.2008 US 248836
(43) Date of publication of application: 23.11.2016
(62) Divisional of application: 08837724.7
(73) Proprietor: QUALCOMM Incorporated, San Diego, CA 92121-1714 (US)
(72) Inventor: GOGIC, Aleksandar M., San Diego, CA, 92121-1714 (US)
(74) Representative: Wegner, Hans

(56) References cited:
- EP-A2- 0 732 817
- WO-A2-00/35117
- DE-A1- 10 032 934
- US-A1- 2005 281 247
- Sean Ginevan: "Femtocells: Is There Room For Them On Your Network?", INTERNET ARTICLE, 27 July 2007 (2007-07-27), XP002510044, Retrieved from the Internet: URL:http://www.networkcomputing.com/articl e/printFullArticle.jhtml;jsessionid=GBC4GH JLL1WZCQSNDLPSKHSCJUNN2JVN?articleID=20120 1521 [retrieved on 2009-01-13]

## Description

### BACKGROUND

### Field

The present application relates generally to wireless communications, and more specifically to methods and systems to enable synchronization of access point base stations or femto cells and pilot searching techniques.

### Background

Wireless communication systems are widely deployed to provide various types of communication (e.g., voice, data, multimedia services, etc.) to multiple users. As the demand for high-rate and multimedia data services rapidly grows, there lies a challenge to implement efficient and robust communication systems with enhanced performance.

In recent years, users have started to replace fixed line communications with mobile communications and have increasingly demanded great voice quality, reliable service, and low prices.

In addition to mobile phone networks currently in place, a new class of small base stations has emerged, which may be installed in a user's home and provide indoor wireless coverage to mobile units using existing broadband Internet connections. Such personal miniature base stations are generally known as access point base stations, or, alternatively, Home Node B (HNB) or Femto cells. Typically, such miniature base stations are connected to the Internet and the mobile operator's network via DSL router or cable modem.

US 2005/0281247 A1 discloses a method and system for time synchronization between access points (APs) in a broadband wireless access (BWA) communication system. A first AP has already acquired a time sync and a second AP has yet not acquired the time sync. The method executed by the second AP includes requesting time sync information from the first AP, receiving the time sync information from the first AP, and acquiring the time sync in accordance with the time sync information.

### BRIEF DESCRIPTION OF THE DRAWINGS

FIG. 1 illustrates an exemplary wireless communication system;
FIG. 2. illustrates an exemplary communication system to enable deployment of access point base stations within a network environment;
FIG. 3 illustrates a method of synchronization of femto cell with macro cell by placing a forward link receiver into the femto cell.
FIG. 4 illustrates pilot phase planning chart.
FIG. 5 illustrates a concept of search windows.
FIG. 6 illustrates a method of Legacy MS is in idle state.
FIG. 7 illustrates a simplified block diagram of several sample aspects of communication components.
FIG. 8 depicts an example block diagram of a system 800 in accordance with additional aspects described herein.

### SUMMARY

The preferred embodiment relates to methods and systems to enable synchronization of access point base stations or femto cells and pilot searching techniques that substantially eliminates one or several disadvantages of the related art. The invention is defined in the independent claims.

In one aspect of the preferred embodiment, there is a system, method and computer product for synchronizing of a femto cell with a macro cell, the method comprising: (a) receiving by a femto cell a macro cell transmission timing; (b) synchronizing the femto cell transmission timing with the micro cellular network transmission timing during deployment of the femto cell in reliance on a forward link receiver signal.

Each femto cell may have an antenna gain that is superior to that of an UE (a.k.a. MS), and is able to acquire the macro system even in radio reception conditions when UE not. In one embodiment, implementation of the forward link receiver within the femto cell adds to the femto cell cost only moderately, due to the modern zero-IF receiver technologies, which are well known to those skilled in the art.

In other aspects of the preferred embodiment, there is a system, method and computer product for setting femto cell pilot phases, the method comprising: (a) dividing 2π phase space into a plurality of macro phase offsets; (b) inserting a plurality of femto phase offsets among macro phase offsets, wherein each femto phase offset is inserted between two adjacent macro phase offsets with the phase spacing controlled in one embodiment by a parameter know as PILOT_INC; (c) creating the same number of usable femto and macro cell phase offsets. The method of creating the same number of usable femto and macro cell phase offsets further comprising: decrementing PILOT_INC while leaving macro phase offsets at even numbered increments of minimum phase spacing, thus creating odd-numbered increments of phase spacing for PN Offsets for femto cells.

In one embodiment, PILOT_INC is lowered by a single digit from the macro-only configuration that had been used prior to deployment of femto cells. This effectively opens up as many PNs for femto cells as there are for Macro cells.

Additional features and advantages of the invention will be set forth in the description that follows, and in part will be apparent from the description, or may be learned by practice of the invention. The advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

### DETAILED DESCRIPTION

The word "exemplary" is used herein to mean "serving as an example, instance, or illustration." Any embodiment described herein as "exemplary" is not necessarily to be construed as preferred or advantageous over other embodiments. The techniques described herein may be used for various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network may implement a radio technology such as Universal Terrestrial Radio Access (UTRA), cdma2000, etc. UTRA includes Wideband-CDMA (W-CDMA) and Low Chip Rate (LCR). cdma2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), IEEE 802.11, IEEE 802.16, IEEE 802.20, Flash-OFDM®, etc. UTRA, E-UTRA, and GSM are part of Universal Mobile Telecommunication System (UMTS). Long Term Evolution (LTE) is an upcoming release of UMTS that uses E-UTRA. UTRA, E-UTRA, GSM, UMTS and LTE are described in documents from an organization named "3rd Generation Partnership Project" (3GPP). cdma2000 is described in documents from an organization named "3rd Generation Partnership Project 2" (3GPP2). These various radio technologies and standards are known in the art.

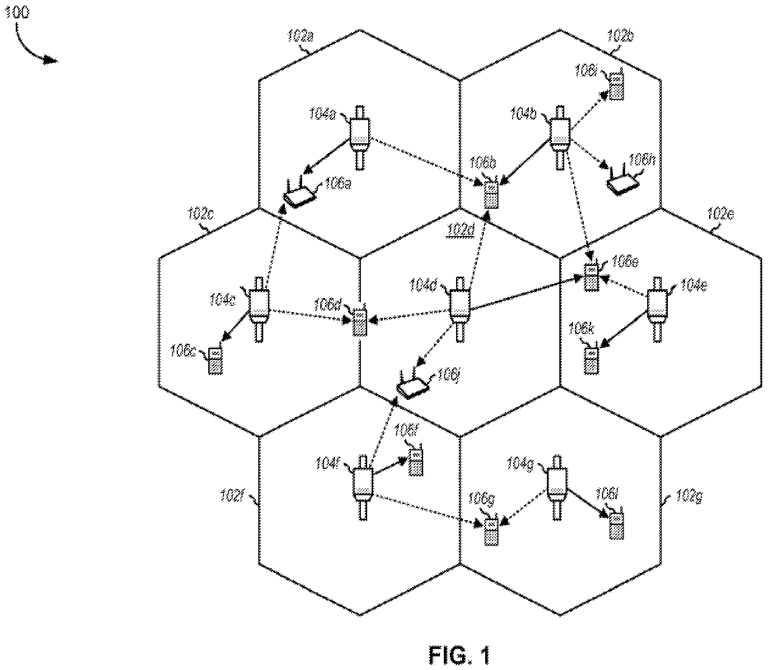

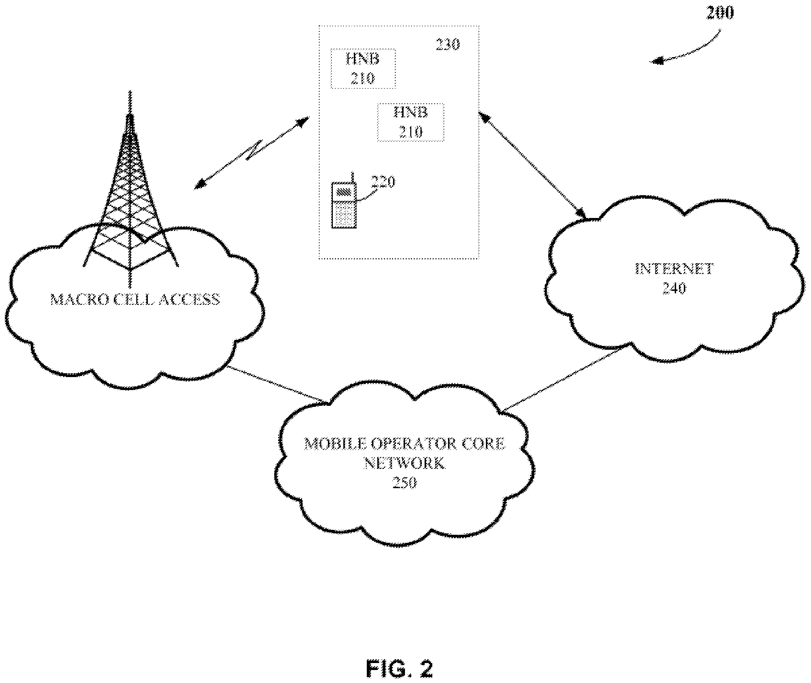

In the description herein, a node that provides coverage over a relatively large area may be referred to as a macro node while a node that provides coverage over a relatively small area (e.g., a residence) may be referred to as a femto node. It should be appreciated that the teachings herein may be applicable to nodes associated with other types of coverage areas. For example, a pico node may provide coverage over an area that is smaller than a macro area and larger than a femto area (e.g., coverage within a commercial building). In various applications, other terminology may be used to reference a macro node, a femto node, or other access point-type nodes. For example, a macro node may be configured or referred to as an access node, base station, access point, eNodeB, macro cell, and so on. Also, a femto node may be configured or referred to as a Home NodeB, Home eNodeB, access point base station, femto cell, and so on. In some implementations, a node may be associated with (e.g., divided into) one or more cells or sectors. A cell or sector associated with a macro node, a femto node, or a pico node may be referred to as a macro cell, a femto cell, or a pico cell, respectively. A simplified example of how femto nodes may be deployed in a network will now be described with reference to FIGS. 1 and 2.

FIG. 1 illustrates an exemplary wireless communication system 100 configured to support a number of users, in which various disclosed embodiments and aspects may be implemented. As shown in FIG. 1, by way of example, system 100 provides communication for multiple cells 102 such as, for example, macro cells 102a-102g, with each cell being serviced by a corresponding access point (AP) or points 104, such as, for example, APs 104a-104g. Each macro cell may be further divided into one or more sectors (not shown). As further shown in FIG. 1, various access terminal (AT) devices 106, including ATs 106a-106l, also known interchangeably as user equipment (UE) or as mobile stations (MS), or as terminal devices, may be dispersed at various locations throughout the system. Each AT 106 may communicate with one or more APs 104 on a forward link (FL) and/or a reverse link (RL) at a given moment, depending upon whether the AT is active and whether it is in soft handoff, for example. The wireless communication system 100 may provide service over a large geographic region. For example, macro cells 102a-102g may cover only a few blocks within a neighborhood or several square miles in a rural environment.

FIG. 2 illustrates an exemplary communication system to enable deployment of femto nodes, also known as femto cells (access point base stations) within a network environment. As shown in FIG. 2, the system 200 includes multiple femto nodes, or, in the alternative, femto cells, access point base stations, Home Node B (HNB) units such as, for example, HNB 210, each being installed in a corresponding relatively small coverage network environment, such as, for example, in one or more sites 230, and such as, for example, being configured to serve associated user equipment 220. Each HNB 210 may be coupled to and further configured to communicate via a wide area network, such as the Internet 240, and to any node on the Internet, including a macro mobile operator core network 250 (also referred to as a "core network").

Although embodiments described herein use 3GPP terminology, it is to be understood that the embodiments may be applied not only to 3GPP (Rel99, Rel5, Rel6, Rel7, etc.) technology, but also to 3GPP2 (1xRTT, 1xEV-DO Rel0, RevA, RevB, etc.) technology, as well as to other known and related technologies. In such embodiments described herein, the proprietor of the HNB 210 might subscribe to mobile services such as, for example, 3G mobile services, offered through the macro mobile operator core network 250, and the UE 220 might be capable of operating both in a macro cellular environment and in an HNB-based small coverage network environment. Thus, the HNB 210 might be adapted for backward compatibility with any existing UE 220.

Various embodiments described in detail below relate to wireless communications, specifically to: System timing synchronization of the femto cell derived from a macro cell and Pilot Phase management of a constellation of femto cells.

### Femto Cell Synchronization

In some communication technologies, femto cell needs to be synchronized with the Macro Cellular network. In one embodiment, femto cell synchronization may be accomplished by incorporating a GPS receiver into the femto cell. Use of the GPS receiver for synchronization of the femto cell restricts physical placement of the femto cell, and it may require a GPS antenna and cable (for example in tall buildings). The GPS receiver implementation also can slow the initial timing acquisition (e.g. upon power-up) of the femto cell, especially indoor installation typical for femto cells, where GPS signal is weak.

In one embodiment, femto cell synchronization may be accomplished by incorporating elements of a forward link receiver into the femto cell. Each femto cell may have an antenna gain that is superior to that of an UE or MS, and is able to acquire a connection with the macro system and use it for clock derivation (synchronization). In one embodiment, implementation of the forward link receiver within the femto cell adds to the femto cell cost only moderately, due to the modern zero-IF receiver technologies. The forward link receiver may improve rejection of the femto cell's own signal by tuning into a carrier frequency used only by the macro base station, which is than the one planned for the femto cell itself.

Incorporation of a forward link receiver into the femto cell allows more flexibility in physical placement of the femto cell (for example basement, low floors). The forward link receiver also allows for fast timing acquisition by femto cells. The forward link receiver also be used to configure femto neighbor lists (macro and femto cells), assist in PN offset setting, and determine geographical location of the femto cell. The forward link receiver may also flag unusual interference, and possibly aid in determining optimum placement in the household. Further, not a full mobile station modem (MSM) is needed for the forward link receiver, thus it is a better choice compare to the GPS receiver.

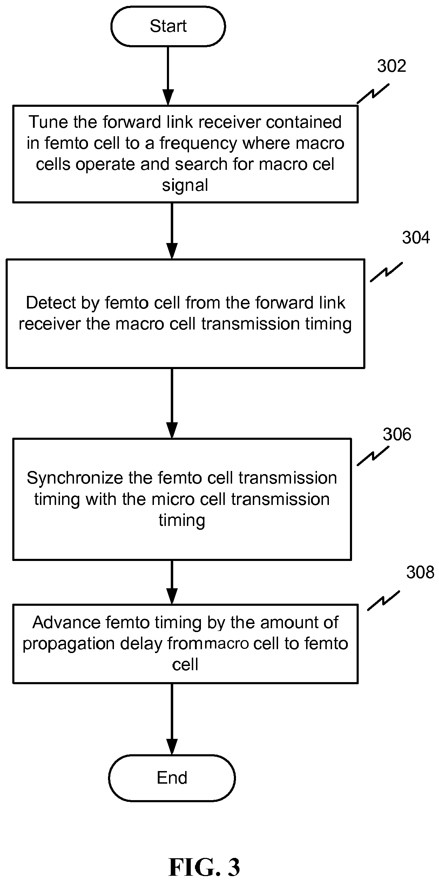

FIG. 3 illustrates a method of synchronizing a femto cell with a macro cell by incorporating a forward link receiver into the femto cell. In Step 302 the forward link receiver contained in the femto cell tunes to a frequency where only macro cells operate, and searches for macro cell signal. In the process of doing so, the forward link receiver may integrate the signal for a long time (several seconds) to detect it at the time the femto cell is being activated, thus being able to detect it even if the signal conditions are weak (very low Ec/Io). In Step 304 the femto cell detects the Macro Cellular network 250 transmission timing. In Step 306 the femto cell synchronizes the femto transmission timing with the macro cellular network transmission timing. Steps outline may occur during initial activation or power on of the femto cell 210. Reduced number of steps or modified/accelerated steps may be needed for the purpose of maintaining synchronization, once attained by the femto cell using the forward link receiver.

Femto cell can is more accurate than a UE in deriving synchronization and determining its location from the macro cellular system. Femto cell detects the macro CDMA system and synchronizes itself with the strongest pilot (with EC/Io above a given threshold). Femto cell comprehensively searches for pilots, and has the ability to locate pilots with very low EC/Io. Femto cell location is fixed, thus it may spend a lot of time searching for pilots of neighboring macro cells and integrating CDMA signals even from very weak pilots. Battery limitation is not an issue here, since femto cell is typically powered from fixed power grid and has fewer constrains on size, if battery back-up is required. Further, an antenna configuration with a higher gain is used by the femto cell compared with UE antenna.

In one embodiment, pursuant to determining its location, femto cell also reports to the Operation, Administration, Maintenance and Provisioning (OAM&P) system pilot PN Offsets and relative timing of the detected macro cells. OAM&P system knows LAT/LON of the macro cells and performs triangulation to determine the location of the femto cell. In one embodiment, the OAM&P system sends LAT/LON information to the subject femto cell. An alternative approach is to perform a LAT/LON lookup from the physical address (point of termination of fixed broadband connection). Multiple approaches could be used as check of consistency, resulting in a more robust procedure.

Synchronization timing derived at the femto cell from the macro cell forward link signal is shifted in time due to propagation delay from the macro transmitter to the femto receiver. This delay must be corrected by advancing the synchronization timing at the femto cell accordingly. The propagation delay can be computed from the locations of the macro cell and the femto cell, both of which are known to the OAM&P system, as explained above and shown in Step 308.

### Femto Cell Pilot Phase Planning

Femto cells allow the operator to roll out the femto cells in an incremental manner, with the number of femto cells deployed growing from a relatively small number in initial years, to a dense deployment of many femco cells in more advanced state in later years. Pilot PN Phases are used to separate forward link signals between neighboring cells, which will have to include femto cells in an advance state of deployment, i.e., when they exist in large numbers and are very dense (not only horizontally, but also vertically in multi-storey buildings. Thus Pilot PN Phase planning must be carefully designed so as to allow such dense deployments. The key part of the Pilot PN Offsets design is allowing many Offsets for femto cells.

In one embodiment, Pilot Phases (PNs) are assigned to the femto cells such that the femto cells are separated from macro cell pilots. This allows the network operator to continue the planning practices for the macro system unchanged. Specifically, the operator should not have to change existing macro cell Pilot PN Offsets at the time femto deployment commences. Additionally, operator should be allowed to continue growing the macro network by taking Pilot PN Offset from a pool of Offsets that it used for existing macro cells, and assigning them to newly deployed macro cell (process known as cell splitting).

In one embodiment, a system parameter PILOT_INC is used to manage the constellation size of the Pilot PN Offsets. For illustration purposes, a macro cell constellation size of 64 is used in embodiments described in detail below. A search window is a system parameter given to the MS receiver to reduce the search effort. Searching over a window is necessary due to the phase shift caused by propagation. In typical urban or suburban settings, cells are much smaller than the 125 km allowable in the 64 cell constellation, for example. Hence, the search window considerably reduces the receiver's search effort. Due to the possibility of overlapping coverage of femto cells (house to house or floor to floor), a constellation of pilots must be provided, so that femto cells don't interfere with each other.

In one embodiment, PILOT_INC is lowered by at least 1 (one) from the macro-only configuration that had been used prior to deployment of femto cells. This effectively opens up as many PNs for femto cells as there are for Macro cells. Alternatively PILOT_INC can be lowered by 2, 3, ... etc, opening progressively more phase offsets for femto cell use.

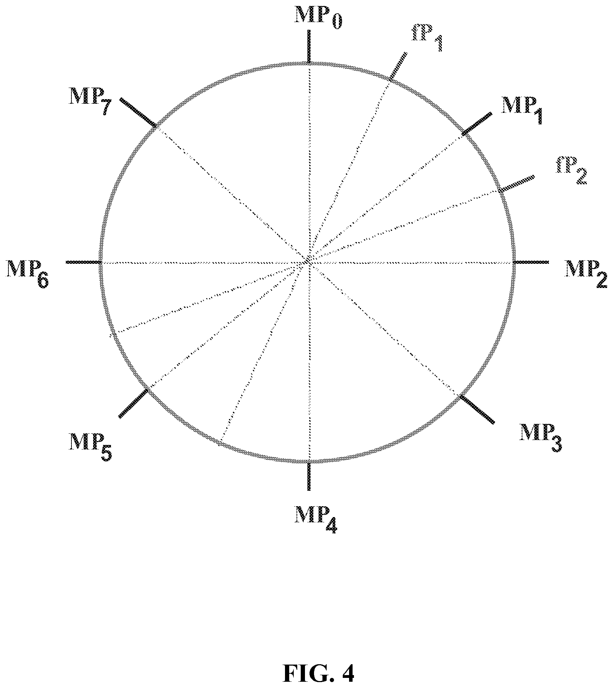

FIG. 4 illustrates a pilot phase planning chart. For simplified illustration, total constellation of 8 phases for macro cells is shown. In an actual network, constellation size of 64 or 128 is more typical. By virtue of decrementing PILOT_INC by 1, the phase space 2π is divided into 8 macro phase offsets in example on FIG. 4 results in creation of 8 additional femto cell offsets inserted in between each of the original 8 offsets. For example, if offsets MP₀ through MP₇ are PN Offsets for macro cells, then fP₁ throught fP₇ are phase offsets for femto cells.

For example, upon decrementing PILOT INC, PN Offsets may comprise 64 macro PN Offsets at 2π/128 ^{∗} 2i, where I ranges from 0 to 63 (even numbered PN Offsets) and with 64 femto PN Offsets at 2π/128 ^{∗} (2i+1) (odd numbered PN Offsets). Initially, at low density of femtos, a subset of odd numbered PN Offsets may be used for femtos, and may be explicitly included in the neighbor list broadcast by the femto cell in the System Parameters Message. By the time femto density gets high, new femto-aware MS will have been fielded and can deal with the entire set of femto PN offsets without their explicit incklusion in the neighbor lists.

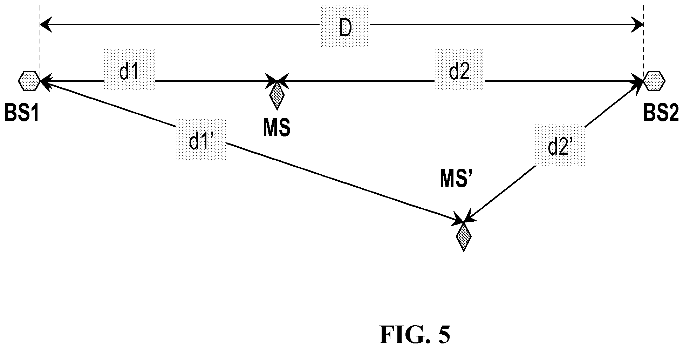

In one embodiment, the search window for femto cells reduces search effort by a UE or MS. Due to phase shifts caused by propagation, time reference at MS, through delivered from Base Station (BS), is different (delayed). FIG. 5 illustrates a concept of search windows. FIG. 5 shows that the time at BS1, BS2: t.
Time at MS: t - d1/C, where C = 3e5 km/s (speed of light).
Phase Lag = (d2-d1)/C; BS2 pilot will appear at MS delayed by this phase lag
Maximum Lag = D/C => Search Window.

This search window is conservative, since BS2 will not be visible or significant to MS until MS is some distance away from BS1. However, some cushion is needed for additional delay caused by multipath.

In one embodiment, decrementing PILOT_INC parameter at the time of introduction of femto cells does not change a macro search windows. Phase spacing of the macro cells remains the same. Femto windows may be smaller than macro, but must be larger than delay to furthest coverage of the referenced macro cell.

For example:
Pilot Period T = 2¹⁵ = 32,768 chips (26.667 ms);
Chip Period T₀ = 1/1.2288 ms = 0.814 ms;
D = Neighbor Cell Distance: 10 km;
PILOT_INC = 3 microseconds, Macro-Macro PN Offset Distance = 512 chips; Macro-Femto = 256 chips;
Search Window: D/(C^{∗}T₀) = 41 chips;
Window as percentage of minimum Macro-Macro phase shift: 41/512 = 8%;
Window as percentage of Macro-femto phase shift: 41/256 = 16%;
PN Offset and search window planning should be such that search windows do not overlap.

Furthermore, CDMA timing has a relatively strict tolerance. The concept of search windows relies upon this strict timing. Femto cell timing can be adjusted based on knowledge of femto location, even if GPS is not available.

In one embodiment, femto cell latitude and longitude (LAT/LON) knowledge is used. It is unimportant how femto LAT/LON is obtained, e.g., address database lookup, triangulation, or other means. The identity and location(s) of one or more of the neighbor macro base stations is also known by the system (also unimportant how acquired).

In one embodiment, OAM&P system computes distance(s) D(i) between macro neighbor BS(s) and femto cell, and corresponding phase delay(s) ΔT(i) = D(i)/C, where C is speed of light.

Femto cell measures phase shift difference(s) it sees T(i) - T(0), but cannot on its own determine absolute phase shift(s). The phase shift(s) are provided to the femto by the OAM&P system.

OAM&P system can perform necessary computations for the timing advance caused by propagation delay, e.g. from the closest macro BS - ΔT(0). OAM&P can convey this timing advance to the femto cell. The femto cell adjusts its timing reference by advancing the received system time from the closest: T_{F} = Tr(0) + ΔT(0). Alternatively, weighted average from multiple macro BSs may be used. Note that this is one-time operation prior to commencing femto forward link transmission.

### Pilot Search Methodology Legacy MS Support

In one embodiment, in order to support MSs with legacy searchers (un-aware of femto cells), a subset of femto cell constellation (LS - for Legacy Set) is initially assigned to femto cells meant to support legacy MSs. Additionally, neighbor list of each and every macro base station is augmented by adding the complete Legacy Set. This is necessary because these legacy MSs have no awareness of femto cells, and must search for femto pilots as if they were macro pilots.

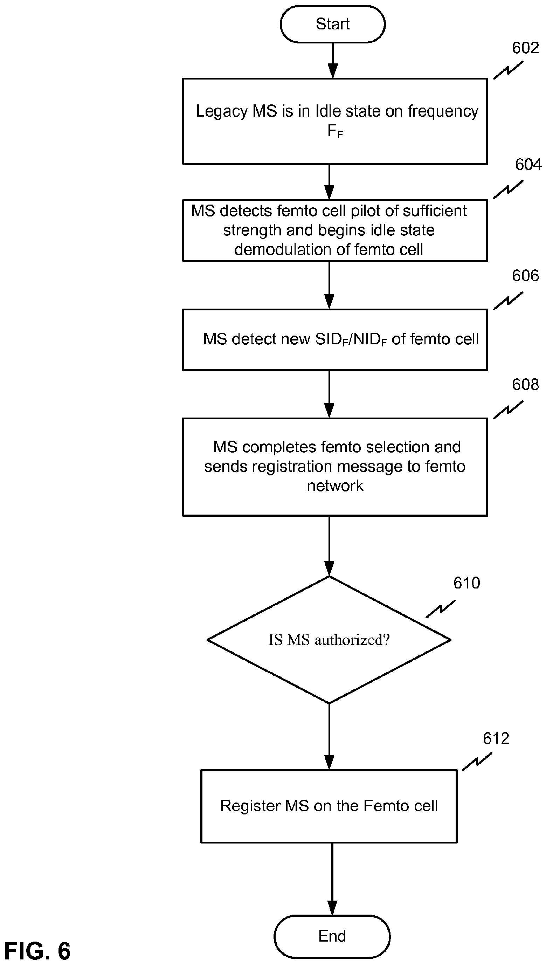

FIG. 6 illustrates a method of Legacy MS is in idle state. In one embodiment, Legacy MS is in idle state on macro network and operates on frequency F_{F}, which is also used for femto cells as shown in Step 602. In addition to macro cell pilots, Neighbor List also includes a subset of femto pilots reserved for legacy MS operation. When MS detects femto pilot of dominant strength it begins idle mode demodulation of femto cell as shown in Step 804, then MS detects new SID_{F}/NID_{F} as shown in Step 806.

In Step 608, MS completes femto selection and sends registration message to femto network. In Step 610, macro network tries to determine if MS is authorized user. Authorized MS will be registered and served there as shown in Step 612.

It should be appreciated that the teachings herein may be implemented in various types of communication devices. In some aspects, the teachings herein may be implemented in wireless devices that may be deployed in multiple access communication system that may simultaneously support communication for multiple wireless access terminals. Here, each terminal may communicate with one or more access points via transmissions on the forward and reverse links. The forward link (or downlink) refers to the communication link from the access points to the terminals, and the reverse link (or uplink) refers to the communication link from the terminals to the access points. This communication link may be established via a single-in-single-out system, a multiple-in-multiple-out ("MIMO") system, or some other type of system.

A MIMO system employs multiple (*N_{T}*) transmit antennas and multiple (*N_{R}*) receive antennas for data transmission. A MIMO channel formed by the *N_{T}* transmit and *N_{R}* receive antennas may be decomposed into *N_{S}* independent channels, which are also referred to as spatial channels, where *N_{S}* ≤ min {*N_{T}*, *N_{R}*}*.* Each of the *N_{S}* independent channels corresponds to a dimension. The MIMO system may provide improved performance (e.g., higher throughput and/or greater reliability) if the additional dimensionalities created by the multiple transmit and receive antennas are utilized.

A MIMO system may support time division duplex ("TDD") and frequency division duplex ("FDD"). In a TDD system, the forward and reverse link transmissions are on the same frequency region so that the reciprocity principle allows the estimation of the forward link channel from the reverse link channel. This enables the access point to extract transmit beam-forming gain on the forward link when multiple antennas are available at the access point.

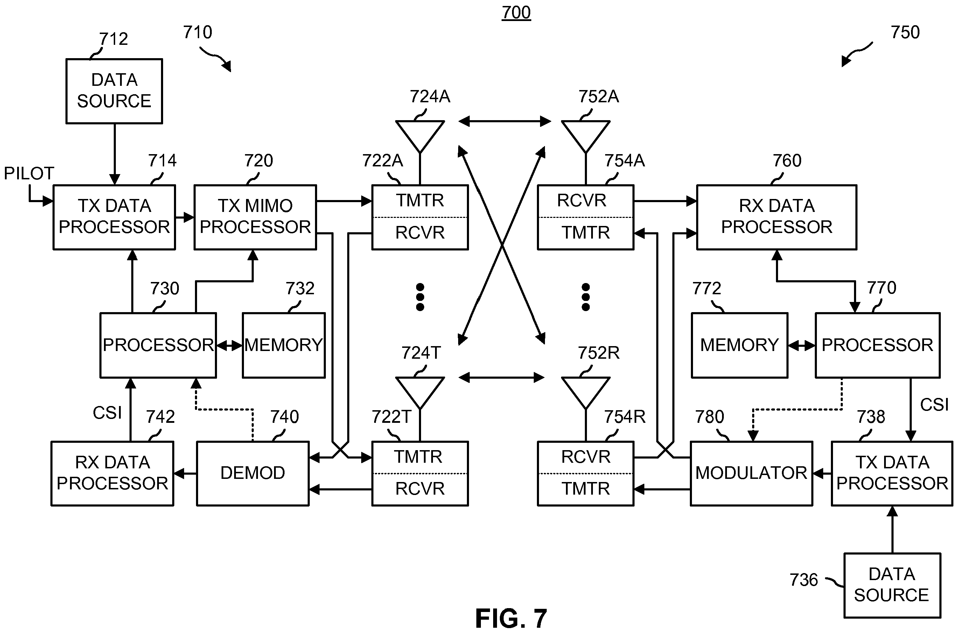

The teachings herein may be incorporated into a node (e.g., a device) employing various components for communicating with at least one other node. FIG. 7 depicts several sample components that may be employed to facilitate communication between nodes. Specifically, FIG. 7 illustrates a wireless device 710 (e.g., an access point) and a wireless device 750 (e.g., an access terminal) of a MIMO system 700. At the device 710, traffic data for a number of data streams is provided from a data source 712 to a transmit ("TX") data processor 714.

In some aspects, each data stream is transmitted over a respective transmit antenna. The TX data processor 714 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by a processor 730. A data memory 732 may store program code, data, and other information used by the processor 730 or other components of the device 710.

The modulation symbols for all data streams are then provided to a TX MIMO processor 720, which may further process the modulation symbols (e.g., for OFDM). The TX MIMO processor 720 then provides *N_{T}* modulation symbol streams to *N_{T}* transceivers ("XCVR") 722A through 722T. In some aspects, the TX MIMO processor 720 applies beam-forming weights to the symbols of the data streams and to the antenna from which the symbol is being transmitted.

Each transceiver 722 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transceivers 722A through 722T are then transmitted from *N_{T}* antennas 724A through 724T, respectively.

At the device 750, the transmitted modulated signals are received by *N_{R}* antennas 752A through 752R and the received signal from each antenna 752 is provided to a respective transceiver ("XCVR") 754A through 754R. Each transceiver 754 conditions (e.g., filters, amplifies, and downconverts) a respective received signal, digitizes the conditioned signal to provide samples, and further processes the samples to provide a corresponding "received" symbol stream.

A receive ("RX") data processor 760 then receives and processes the *N_{R}* received symbol streams from *N_{R}* transceivers 754 based on a particular receiver processing technique to provide *N_{T}* "detected" symbol streams. The RX data processor 760 then demodulates, deinterleaves, and decodes each detected symbol stream to recover the traffic data for the data stream. The processing by the RX data processor 760 is complementary to that performed by the TX MIMO processor 720 and the TX data processor 714 at the device 710.

A processor 770 periodically determines which pre-coding matrix to use (discussed below). The processor 770 formulates a reverse link message comprising a matrix index portion and a rank value portion. A data memory 772 may store program code, data, and other information used by the processor 770 or other components of the device 750.

The reverse link message may comprise various types of information regarding the communication link and/or the received data stream. The reverse link message is then processed by a TX data processor 738, which also receives traffic data for a number of data streams from a data source 736, modulated by a modulator 780, conditioned by the transceivers 754A through 754R, and transmitted back to the device 710.

At the device 710, the modulated signals from the device 750 are received by the antennas 724, conditioned by the transceivers 722, demodulated by a demodulator ("DEMOD") 740, and processed by a RX data processor 742 to extract the reverse link message transmitted by the device 750. The processor 730 then determines which pre-coding matrix to use for determining the beam-forming weights then processes the extracted message.

The teachings herein may be incorporated into various types of communication systems and/or system components. In some aspects, the teachings herein may be employed in a multiple-access system capable of supporting communication with multiple users by sharing the available system resources (e.g., by specifying one or more of bandwidth, transmit power, coding, interleaving, and so on). For example, the teachings herein may be applied to any one or combinations of the following technologies: Code Division Multiple Access ("CDMA") systems, Multiple-Carrier CDMA ("MCCDMA"), Wideband CDMA ("W-CDMA"), High-Speed Packet Access ("HSPA," "HSPA+") systems, Time Division Multiple Access ("TDMA") systems, Frequency Division Multiple Access ("FDMA") systems, Single-Carrier FDMA ("SC-FDMA") systems, Orthogonal Frequency Division Multiple Access ("OFDMA") systems, or other multiple access techniques. A wireless communication system employing the teachings herein may be designed to implement one or more standards, such as IS-95, cdma2000, IS-856, W-CDMA, TDSCDMA, and other standards. A CDMA network may implement a radio technology such as Universal Terrestrial Radio Access ("UTRA)", cdma2000, or some other technology. UTRA includes W-CDMA and Low Chip Rate ("LCR"). The cdma2000 technology covers IS-2000, IS-95 and IS-856 standards. A TDMA network may implement a radio technology such as Global System for Mobile Communications ("GSM"). An OFDMA network may implement a radio technology such as Evolved UTRA ("E-UTRA"), IEEE 802.11, IEEE 802.16, IEEE 802.20, Flash-OFDM®, etc. UTRA, E-UTRA, and GSM are part of Universal Mobile Telecommunication System ("UMTS"). The teachings herein may be implemented in a 3GPP Long Term Evolution ("LTE") system, an Ultra-Mobile Broadband ("UMB") system, and other types of systems. LTE is a release of UMTS that uses E-UTRA. Although certain aspects of the disclosure may be described using 3GPP terminology, it is to be understood that the teachings herein may be applied to 3GPP (Re199, Re15, Re16, Re17) technology, as well as 3GPP2 (IxRTT, 1xEV-DO RelO, RevA, RevB) technology and other technologies.

The teachings herein may be incorporated into (e.g., implemented within or performed by) a variety of apparatuses (e.g., nodes). In some aspects, a node (e.g., a wireless node) implemented in accordance with the teachings herein may comprise an access point or an access terminal.

For example, an access terminal may comprise, be implemented as, or known as user equipment, a subscriber station, a subscriber unit, a mobile station, a mobile, a mobile node, a remote station, a remote terminal, a user terminal, a user agent, a user device, or some other terminology. In some implementations an access terminal may comprise a cellular telephone, a cordless telephone, a session initiation protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smart phone), a computer (e.g., a laptop), a portable communication device, a portable computing device (e.g., a personal data assistant), an entertainment device (e.g., a music device, a video device, or a satellite radio), a global positioning system device, or any other suitable device that is configured to communicate via a wireless medium.

An access point may comprise, be implemented as, or known as a NodeB, an eNodeB, a radio network controller ("RNC"), a base station ("BS"), a radio base station ("RBS"), a base station controller ("BSC"), a base transceiver station ("BTS"), a transceiver function ("TF"), a radio transceiver, a radio router, a basic service set ("BSS"), an extended service set ("ESS"), or some other similar terminology.

In some aspects a node (e.g., an access point) may comprise an access node for a communication system. Such an access node may provide, for example, connectivity for or to a network (e.g., a wide area network such as the Internet or a cellular network) via a wired or wireless communication link to the network. Accordingly, an access node may enable another node (e.g., an access terminal) to access a network or some other functionality. In addition, it should be appreciated that one or both of the nodes may be portable or, in some cases, relatively non-portable.

Also, it should be appreciated that a wireless node may be capable of transmitting and/or receiving information in a non-wireless manner (e.g., via a wired connection). Thus, a receiver and a transmitter as discussed herein may include appropriate communication interface components (e.g., electrical or optical interface components) to communicate via a non-wireless medium.

A wireless node may communicate via one or more wireless communication links that are based on or otherwise support any suitable wireless communication technology. For example, in some aspects a wireless node may associate with a network. In some aspects the network may comprise a local area network or a wide area network. A wireless device may support or otherwise use one or more of a variety of wireless communication technologies, protocols, or standards such as those discussed herein (e.g., CDMA, TDMA, OFDM, OFDMA, WiMAX, Wi-Fi, and so on). Similarly, a wireless node may support or otherwise use one or more of a variety of corresponding modulation or multiplexing schemes. A wireless node may thus include appropriate components (e.g., air interfaces) to establish and communicate via one or more wireless communication links using the above or other wireless communication technologies. For example, a wireless node may comprise a wireless transceiver with associated transmitter and receiver components that may include various components (e.g., signal generators and signal processors) that facilitate communication over a wireless medium.

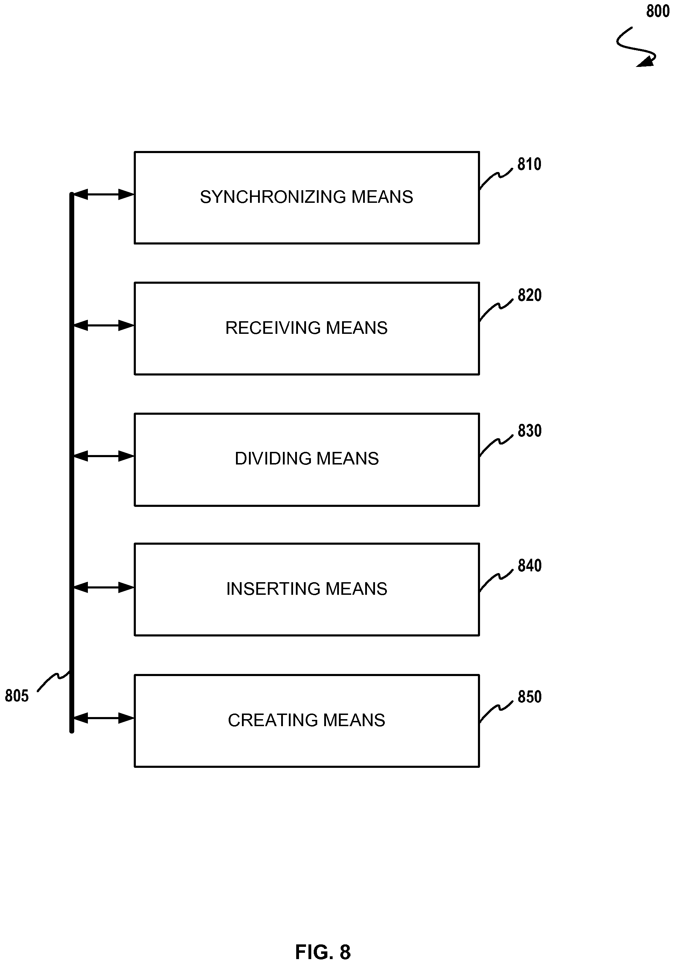

FIG. 8 depicts an example block diagram of a system 800 in accordance with additional aspects described herein. System 800 provides an apparatus that can facilitate femto cell synchronization. Specifically, system 800 can include a plurality of modules or means, such as, for example, synchronizing means 810, receiving means 820, dividing means 830, inserting means 840, creating means 850, each connected to a communication link 805, and being able to communicate with other modules or means over communication link 805.

While the specification describes particular examples of the present invention, those of ordinary skill can devise variations of the present invention without departing from the inventive concept. For example, the teachings herein refer to circuit-switched network elements but are equally applicable to packet-switched domain network elements.

Those skilled in the art will understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the examples disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods or algorithms described in connection with the examples disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor. The processor and the storage medium may reside in an ASIC.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosed examples is provided to enable any person skilled in the art to make or use the present invention. Various modifications to these examples will be readily apparent to those skilled in the art, and the generic principles defined herein may be applied to other examples without departing from the scope of the invention as defined by the appended claims.

## Claims

1. A method (300) for synchronizing a femto cell with a macro cell, the method comprising:
receiving (304) a macro cell forward link signal from a macro cell at a forward link receiver in the femto cell; and
synchronizing (306) a transmission timing of the femto cell with a transmission timing of the macro cell in reliance on the macro cell forward link signal;
wherein a synchronization timing derived at the femto cell from the macro cell forward link signal is shifted in time due to a propagation delay from the macro cell to the femto cell, and wherein the propagation delay is computed from known locations of the macro cell and the femto cell.

2. The method of claim 1, wherein the forward link receiver implements a zero-IF receiver.

3. The method of claim 1, wherein the forward link receiver permits a fast timing acquisition by a femto cell.

4. The method of claim 1, wherein the forward link receiver assists in determining geographical location of the femto cell.

5. The method of claim 4, wherein the forward link receiver configuration comprises a high gain antenna, including a steer beam antenna.

6. The method of claim 1, wherein the propagation delay from the macro cell to the femto cell is corrected by advancing the synchronization timing at the femto cell accordingly.

7. An apparatus for synchronizing a femto cell with a macro cell, the apparatus comprising:
means for receiving a macro cell forward link signal from a macro cell at a forward link receiver in the femto cell; and
means for synchronizing a transmission timing of the femto cell with a transmission timing of the macro cell in reliance on the macro cell forward link signal;
wherein a synchronization timing derived at the femto cell from the macro cell forward link signal is shifted in time due to a propagation delay from the macro cell to the femto cell, and wherein the propagation delay is computed from known locations of the macro cell and the femto cell.

8. The apparatus of claim 7, wherein the forward link receiver implements a zero-IF receiver.

9. The apparatus of claim 7, wherein
the forward link receiver configuration comprises a high gain antenna;
the said high gain antenna is steerable.

10. The apparatus of claim 7, wherein the forward link receiver permits a fast timing acquisition of femto cells.

11. The apparatus of claim 7, wherein the forward link receiver assists in determining geographical location of the femto cell.

12. The apparatus of claim 7, wherein the propagation delay from the macro cell to the femto cell is corrected by advancing the synchronization timing at the femto cell accordingly.

13. A computer program comprising instructions for carrying out a method according to any of claims 1 to 6 when run on a computer.

## Patentansprüche

1. Ein Verfahren (300) zum Synchronisieren einer Femtozelle mit einer Makrozelle, wobei das Verfahren umfasst:
Empfangen (304) eines Makrozellen-Vorwärtsverbindungssignals von einer Makrozelle an einem Vorwärtsverbindungsempfänger in der Femtozelle; und
Synchronisierung (306) einer Übertragungszeit der Femtozelle mit einer Übertragungszeit der Makrozelle in Abhängigkeit vom Makrozellen-Vorwärtsverbindungssignal;
wobei eine Synchronisationszeit, die an der Femtozelle aus dem Makrozellen-Vorwärtsverbindungssignal abgeleitet wird, aufgrund einer Ausbreitungsverzögerung von der Makrozelle zur Femtozelle zeitlich verschoben wird, und wobei die Ausbreitungsverzögerung aus bekannten Stellen der Makrozelle und der Femtozelle berechnet wird.

2. Verfahren nach Anspruch 1, wobei der Vorwärtsstrecken-Empfänger einen Null-IF-Empfänger implementiert.

3. Verfahren nach Anspruch 1, wobei der Vorwärtsstrecken-Empfänger eine schnelle Zeiterfassung durch eine Femtozelle ermöglicht.

4. Verfahren nach Anspruch 1, bei dem der Vorwärtsstrecken-Empfänger bei der Bestimmung der geographischen Lage der Femtozelle hilft.

5. Verfahren nach Anspruch 4, wobei die Konfiguration des Vorwärtsstrecken-Empfängers eine Antenne mit hohem Gewinn, einschließlich einer Lenkstrahlantenne, umfasst.

6. Verfahren nach Anspruch 1, bei dem die Ausbreitungsverzögerung von der Makrozelle zur Femtozelle durch entsprechendes Vorverlegen der Synchronisationszeit an der Femtozelle korrigiert wird.

7. Vorrichtung zum Synchronisieren einer Femtozelle mit einer Makrozelle, wobei die Vorrichtung umfasst:
Mittel zum Empfangen eines Makrozellen-Vorwärtsverbindungssignals von einer Makrozelle an einem Vorwärtsverbindungsempfänger in der Femtozelle; und
Mittel zur Synchronisierung einer Übertragungszeit der Femtozelle mit einer Übertragungszeit der Makrozelle in Abhängigkeit vom Makrozellen-Vorwärtsverbindungssignal;
wobei eine Synchronisationszeit, die an der Femtozelle aus dem Makrozellen-Vorwärtsverbindungssignal abgeleitet wird, aufgrund einer Ausbreitungsverzögerung von der Makrozelle zur Femtozelle zeitlich verschoben wird, und wobei die Ausbreitungsverzögerung aus bekannten Stellen der Makrozelle und der Femtozelle berechnet wird.

8. Vorrichtung nach Anspruch 7, wobei der Vorwärtsstrecken-Empfänger einen Null-IF-Empfänger implementiert.

9. Vorrichtung nach Anspruch 7, wobei
Die Vorwärtsstrecken-Empfängerkonfiguration umfasst eine Antenne mit hohem Gewinn;
die genannte Antenne mit hohem Gewinn steuerbar ist.

10. Vorrichtung nach Anspruch 7, wobei der Vorwärtsstrecken-Empfänger eine schnelle Zeiterfassung von Femtozellen ermöglicht.

11. Vorrichtung nach Anspruch 7, bei der der Vorwärtsstrecken-Empfänger bei der Bestimmung der geographischen Lage der Femtozelle hilft.

12. Vorrichtung nach Anspruch 7, bei der die Ausbreitungsverzögerung von der Makrozelle zur Femtozelle korrigiert wird, indem die Synchronisationszeit an der Femtozelle entsprechend vorverlegt wird.

13. Computerprogramm mit Anweisungen zur Durchführung eines Verfahrens nach einem der Ansprüche 1 bis 6, wenn es auf einem Computer ausgeführt wird.

## Revendications

1. Un procédé (300) pour synchroniser une femtocellule avec une macrocellule, le procédé comprenant :
la réception (304) d'un signal de liaison aller de macrocellule depuis une macrocellule au niveau d'un récepteur de liaison aller dans la femtocellule ; et
la synchronisation (306) d'un séquencement de transmission de la femtocellule avec un séquencement de transmission de la macrocellule en se fondant sur le signal de liaison aller de macrocellule ;
dans lequel un séquencement de synchronisation obtenu au niveau de la femtocellule à partir du signal de liaison aller de macrocellule est décalé dans le temps en raison d'un retard de propagation de la macrocellule à la femtocellule, et dans lequel le retard de propagation est calculé à partir d'emplacements connus de la macrocellule et de la femtocellule.

2. Le procédé de la revendication 1, dans lequel le récepteur de liaison aller implémente un récepteur zéro-IF.

3. Le procédé de la revendication 1, dans lequel le récepteur de liaison aller permet une acquisition à séquencement rapide par une femtocellule.

4. Le procédé de la revendication 1, dans lequel le récepteur de liaison aller facilite la détermination d'un emplacement géographique de la femtocellule.

5. Le procédé de la revendication 4, dans lequel la configuration de récepteur de liaison aller comprend une antenne à gain élevé, notamment une antenne à faisceau orientable.

6. Le procédé de la revendication 1, dans lequel le retard de propagation de la macrocellule à la femtocellule est corrigé en avançant le séquencement de synchronisation au niveau de la femtocellule en conséquence.

7. Un appareil pour synchroniser une femtocellule avec une macrocellule, l'appareil comprenant :
des moyens pour recevoir un signal de liaison aller de macrocellule depuis une macrocellule au niveau d'un récepteur de liaison aller dans la femtocellule ; et
des moyens pour synchroniser un séquencement de transmission de la femtocellule avec un séquencement de transmission de la macrocellule en se fondant sur le signal de liaison aller de macrocellule ;
dans lequel un séquencement de synchronisation obtenu au niveau de la femtocellule à partir du signal de liaison aller de macrocellule est décalé dans le temps en raison d'un retard de propagation de la macrocellule à la femtocellule, et dans lequel le retard de propagation est calculé à partir d'emplacements connus de la macrocellule et de la femtocellule.

8. L'appareil de la revendication 7, dans lequel le récepteur de liaison aller implémente un récepteur zéro-IF.

9. L'appareil de la revendication 7, dans lequel
la configuration de récepteur de liaison aller comprend une antenne à gain élevé ; ladite antenne à gain élevé est orientable.

10. L'appareil de la revendication 7, dans lequel le récepteur de liaison aller permet une acquisition à séquencement rapide de femtocellules.

11. L'appareil de la revendication 7, dans lequel le récepteur de liaison aller facilite la détermination d'un emplacement géographique de la femtocellule.

12. L'appareil de la revendication 7, dans lequel le retard de propagation de la macrocellule à la femtocellule est corrigé en avançant le séquencement de synchronisation au niveau de la femtocellule en conséquence.

13. Un programme d'ordinateur comprenant des instructions pour réaliser un procédé selon l'une quelconque des revendications 1 à 6 lorsqu'il est exécuté sur un ordinateur.
